# EUROPEAN PATENT SPECIFICATION

(11) **EP 0 490 452 B1**
(45) Date of publication and mention of the grant of the patent: **11.09.1996**
(21) Application number: 91203246.3
(22) Date of filing: 10.12.1991
(51) Int. Cl.: C08G 67/02

(54) **Catalyst compositions and process for the preparation of polymers**
Katalysatormassen und Verfahren zur Herstellung von Polymeren
Compositions de catalyseur et procédé de préparation de polymères

(30) Priority: 13.12.1990 NL 9002739
(43) Date of publication of application: 17.06.1992
(73) Proprietor: SHELL INTERNATIONALE RESEARCH MAATSCHAPPIJ B.V., NL-2596 HR Den Haag (NL)
(72) Inventor: Drent, Eit, NL-1031 CM Amsterdam (NL)

(56) References cited:
- EP-A- 0 181 014
- EP-A- 0 235 866
- EP-A- 0 246 674
- EP-A- 0 253 416
- EP-A- 0 339 744
- US-A- 4 940 776

## Description

The invention relates to novel catalyst compositions suitable for use in the preparation of polymers of carbon monoxide with one or more olefinically unsaturated compounds.

It is known that linear polymers of carbon monoxide with one or more olefinically unsaturated compounds in which polymers the units from carbon monoxide and the units from the olefinically unsaturated compounds are present in a substantially alternating arrangement, can be prepared by contacting the monomers at elevated temperature and pressure with a catalyst composition on the basis of:
a) a Group VIII metal,
b) an anion of an acid, and
c) a phosphorus bidentate ligand of the general formula (R¹)(R²)P-R-P(R¹)(R²) in which R¹ and R² represent identical or different hydrocarbyl groups and in which R is a divalent organic bridging group which contains at least two carbon atoms in the bridge connecting the two phosphorus atoms.

In earlier investigations concerning the above-mentioned catalyst compositions it was found that their polymerization activity is highly dependent on the strength of the acid from which the anion mentioned as component b) is derived. The acids can be divided into three classes, viz. strong acids having a pK_{A} of less than 2 such as perchloric acid and trifluoroacetic acid, moderately strong acids having a pK_{A} of at least 2 but less than 4 such as tartaric acid and phosphoric acid, and weak acids having a pK_{A} of at least 4 but less than 6 such as acetic acid. It was found that catalyst compositions which contain an anion of a strong acid as component b), such as those known from EP-A-181014, display a high polymerization activity, while the incorporation in the catalyst compositions of an anion of a moderately strong acid as component b) results in a low polimerization activity. Although in the polymerization using a catalyst composition containing an anion of a strong or moderately strong acid as component b) an increase in the polymerization activity can be obtained by raising the temperature at which the polymerization is carried out, this is accompanied by a decrease in the molecular weight of the prepared polymers. The investigations also showed that catalyst compositions containing a weak acid as component b) only possess an extremely low polymerization activity. For example, in EP-A-181014 no polymer was formed when acetic acid was used. Attempts to improve this situation by a large rise in the temperature at which the polymerization is carried out or by a large increase in the concentration of the weak acid in the catalyst composition proved unsuccessful. In the polymerization of carbon monoxide with ethene using a palladium/1,3-bis(diphenylphosphino)propane/acetic acid catalyst composition containing 20 mol acetic acid per g.atom palladium, only a trace of polymer was formed both at a temperature of 90°C and at a temperature of 135°C. The same disappointing result was still obtained even after increasing the acid concentration in the catalyst composition from 20 mol/g.atom palladium to 100 mol/g.atom palladium.

In view of the high polymerization activity which anions of strong acids impart to the catalyst compositions, the present alternating polymers have hitherto mainly been prepared using catalyst compositions in which such anions were present as component b). In further research, it was found that besides phosphorus bidentate ligands in which the groups R¹ and R² attached to phosphorus are hydrocarbyl groups, phosphorus bidentate ligands in which these groups are polar substituted hydrocarbyl groups are very suitable for being incorporated as component c) in catalyst compositions which contain as component b) an anion of an acid with a pK_{A} of less than 6, preferably less than 2.

In an investigation by the applicant concerning the above-described catalyst compositions on the basis of:
a) a Group VIII metal,
b) an anion of an acid, having a pK_{A} of less than 2, and
c) a phosphorus bidentate ligand of the general formula (R³)(R⁴)P-R-P(R³)(R⁴) in which R³ and R⁴ represent identical or different optionally substituted hydrocarbyl groups and in which R has the previously indicated meaning,
it has now been found that the polymerization activity of these catalyst compositions can be greatly improved by incorporating therein a weak acid as component d). This is surprising in view of the disappointing results in earlier experiments in which these acids had been used as component b) in the catalyst compositions.

Catalyst compositions on the basis of:
a) a Group VIII metal,
b) an anion of an acid having a pK_{A} of less than 2,
c) a phosphorus bidentate ligand of the general formula (R³)(R⁴)P-R-P(R³)(R⁴), and
d) an acid having a pK_{A} of at least 4 but less than 6 in a quantity of at least 10 mol per g.atom Group VIII metal,
are novel.

The present patent application therefore relates to novel catalyst compositions on the basis of the components a)-d). The patent application further relates to the application of these catalyst compositions in the preparation of polymers of carbon monoxide with one or more olefinically unsaturated compounds.

In this patent application, Group VIII metals are understood to be the noble metals ruthenium, rhodium, palladium, osmium, iridium and platinum, as well as the iron group metals iron, cobalt and nickel. In the catalyst compositions according to the invention the Group VIII metal is preferably selected from palladium, nickel and cobalt. Palladium is particularly preferred as Group VIII metal. The incorporation of the Group VIII metal in the catalyst compositions preferably takes place in the form of a salt of a carboxylic acid, in particular in the form of an acetate.

The anions which are eligible to be used as component b) in the catalyst compositions should be derived from acids having a pK_{A} of less than 2. Examples of such acids are mineral acids such as sulphuric acid and perchloric acid, sulphonic acids such as methanesulphonic acid, trifluoromethanesulphonic acid and para-toluenesulphonic acid, and halocarboxylic acids such as trichloroacetic acid, difluoroacetic acid and trifluoroacetic acid. The incorporation of component b) in the catalyst compositions can take place in the form of an acid or in the form of a salt. As acid, trifluoroacetic acid is very suitable and as salt, nickel perchlorate or trifluoromethanesulphonate. The quantity of component b) in the catalyst compositions is preferably 1-100 and in particular 2-50 mol per g.atom Group VIII metal.

In the phosphorus bidentate ligands of the general formula (R³)(R⁴)P-R-P(R³)(R⁴) the groups R³ and R⁴ may have a cyclic or an acyclic structure. If they have a cyclic structure, they can be aromatic or alicyclic. If desired, the groups R³ and R⁴ together with the phosphorus atom may form a ring, for example a phosphacyclohexyl ring.

If the groups R³ and R⁴ are aromatic hydrocarbyl groups, optionally polar substituted phenyl groups are preferred. If it is intended to use the catalyst compositions for the preparation of copolymers of carbon monoxide with ethene, it is preferred to use a catalyst composition containing a phosphorus bidentate ligand in which the groups R³ and R⁴ are 2-methoxyphenyl groups and in which the bridging group R contains three atoms in the bridge. If the groups R³ and R⁴ possess an acyclic structure, alkyl groups are preferred. If it is intended to use the catalyst compositions for the preparation of polymers of carbon monoxide with one or more α-olefins having at least three carbon atoms per molecule and optionally also with ethene, it is preferred to use a catalyst composition containing a phosphorus bidentate ligand in which the groups R³ and R⁴ are alkyl groups, and/or in which the bridging group R contains four atoms in the bridge. In this case, there is additionally preference for phosphorus bidentate ligands in which the alkyl groups differ from each other in carbon number and in particular for phosphorus bidentate ligands in which R³ is a methyl group and R⁴ is an n-butyl group. As regards the bridging group R, there is preference for, depending on the nature of the polymers to be prepared, groups in which the bridge connecting the two phosphorus atoms with each other contains three or four atoms. Examples of suitable bridging groups R are the -CH₂-CH₂-CH₂- group, the -CH₂-C(CH₃)₂-CH₂- group, the -CH₂-Si(CH₃)₂-CH₂- group, the -CH₂-CH₂-CH₂-CH₂- group and the -CH₂-C(CH₃)₂-C(CH₃)₂-CH₂- group. Examples of very suitable phosphorus bidentate ligands are 1,3-bis[bis(2-methoxyphenyl)phosphino]propane, 1,3-bis(diisobutylphosphino)propane, and 1,4-bis(methyl,n-butylphosphino)butane. The quantity of phosphorus bidentate ligand incorporated in the catalyst composition is preferably 0.5-2 and in particular 0.75-1.5 mol per g.atom Group VIII metal.

As examples of weak acids with a pK_{A} of at least 4 but less than 6 which are eligible to be used as component d) in the catalyst compositions according to the invention, carboxylic acids can be mentioned such as benzoic acid, acetic acid, adipic acid, iso-butyric acid, heptanoic acid, γ-phenylbutyric acid, pivalic acid, valeric acid and 2,4,6-trimethylbenzoic acid and phenols such as pentachlorophenol and pentafluorophenol. Acetic acid is preferred as component d). The quantity of component d) incorporated in the catalyst compositions is preferably 10-10,000 and in particular 20-5000 mol per g.atom Group VIII metal.

In addition to the components a)-d), the catalyst compositions according to the invention can also contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-Benzoquinone and 1,4-naphthoquinone are preferred. The quantity of organic oxidising agent used is preferably 5-5000 and in particular 10-1000 mol per g.atom Group VIII metal.

The polymerization using the catalyst compositions according to the invention is preferably carried out by contacting the monomers with a solution of the catalyst composition in a diluent in which the polymers are insoluble or virtually insoluble. Lower aliphatic alcohols such as methanol are very suitable as diluents. If desired, the polymerization can also be carried out in the gas phase. As olefinically unsaturated compounds which with the aid of the catalyst compositions according to the invention can be polymerized with carbon monoxide, compounds are eligible which consist solely of carbon and hydrogen as well as compounds which in addition to carbon and hydrogen also contain one or more heteroatoms. The catalyst compositions are preferably used for the preparation of polymers of carbon monoxide with one or more olefinically unsaturated hydrocarbons, having up to 20 carbon atoms in particular. Examples of suitable hydrocarbon monomers are ethene and α-olefins with at least three carbon atoms per molecule, such as propene, butene-1, hexene-1 and octene-1, styrene, norbornene, cyclopentene and dicyclopentadiene. The catalyst compositions are particularly suitable for use in the preparation of copolymers of carbon monoxide with ethene or with propene and in the preparation of terpolymers of carbon monoxide with ethene and with propene.

The quantity of catalyst composition used in the preparation of the polymers can vary within wide limits. Per mol of olefinically unsaturated compound to be polymerized, a quantity of catalyst composition is preferably used which contains 10⁻⁷-10⁻³ and in particular 10⁻⁶-10⁻⁴ g.atom Group VIII metal.

The preparation of the polymers is preferably carried out at a temperature of 25-150°C and a pressure of 2-150 bar and in particular at a temperature of 30-130°C and a pressure of 5-100 bar.

The invention will now be illustrated with reference to the following examples.

### Example 1

Into a stirred autoclave with a volume of 300 ml a catalyst solution was introduced consisting of:
50 ml methanol,
0.1 mmol palladium acetate,
2 mmol acetic acid, and
0.15 mmol 1,3-bis(diphenylphosphino)propane.

After removing air from the autoclave, ethene was forced in until a pressure of 30 bar was reached and then carbon monoxide until a pressure of 60 bar was reached. The contents of the autoclave were then brought to 90°C. After 5 hours the contents of the autoclave were cooled to room temperature and the pressure was released. Only a trace of polymer material was formed.

### Example 2

This example was carried out in substantially the same way as example 1, but with the following differences:
a) the reaction temperature was 135°C instead of 90°C, and
b) the reaction time was 15 hours instead of 5 hours.

In this case as well, only a trace of polymer material was formed.

### Example 3

This example was carried out in substantially the same way as example 1, but with the following differences:
a) the catalyst solution contained 10 mmol acetic acid instead of 2 mmol,
b) 20 bar ethene and 20 bar carbon monoxide were forced into the autoclave instead of 30 bar each, and
c) the reaction time was 1 hour instead of 5 hours.

No polymer material was formed.

### Example 4

A carbon monoxide/ethene copolymer was prepared as follows.

Into a stirred autoclave with a volume of 250 ml a catalyst solution was introduced consisting of:
50 ml methanol,
0.1 mmol palladium acetate,
0.5 mmol nickel perchlorate, and
0.12 mmol 1,3-bis(di n-butylphosphino)propane.

After removing air from the autoclave, ethene was forced in until a pressure of 20 bar was reached and then carbon monoxide until a pressure of 50 bar was reached. The contents of the autoclave were then brought to 70°C. After 4 hours the polymerization was terminated by cooling the reaction mixture to room temperature and releasing the pressure. The polymer was filtered off, washed with methanol and dried.

12.0 g copolymer was obtained. The polymerization rate was 300 g copolymer/(g palladium.hour).

### Example 5

A carbon monoxide/ethene copolymer was prepared in substantially the same way as in example 4, but with the following differences:
a) the catalyst solution additionally contained 160 mmol acetic acid, and
b) the reaction time was 1.5 hours instead of 4 hours.

12.8 g copolymer was obtained. The polymerization rate was 850 g copolymer/(g palladium.hour).

### Example 6

A carbon monoxide/ethene copolymer was prepared in substantially the same way as in example 4, but with the following differences:
a) the catalyst solution contained 2 mmol trifluoroacetic acid and 0.12 mmol 1,3-bis(diphenylphosphino)propane instead of nickel perchlorate and 1,3-bis(di n-butylphosphino)propane respectively, and
b) the reaction time was 2 hours instead of 4 hours.

15.0 g copolymer was obtained. The polymerization rate was 750 g copolymer/(g palladium.hour).

### Example 7

A carbon monoxide/ethene copolymer was prepared in substantially the same way as in example 6, but with the difference that the catalyst solution additionally contained 160 mmol acetic acid.

22.0 g copolymer was obtained. The polymerization rate was 1100 g copolymer/(g palladium.hour).

### Example 8

A carbon monoxide/propene copolymer was prepared as follows.

Into a stirred autoclave with a volume of 300 ml containing 30 ml of propene, a catalyst solution was introduced consisting of:
50 ml methanol,
0.1 mmol palladium acetate,
0.12 mmol 1,3-bis(diisobutylphosphino)propane, and
0.1 mmol Ni(II) trifluoromethanesulphonate.

After removing air from the autoclave and bringing the contents of the autoclave to 50°C, carbon monoxide was forced in until a pressure of 40 bar was reached. After 5 hours the contents of the autoclave were cooled to room temperature and the pressure was released. The polymer was filtered off, washed with methanol and dried.

1.0 g copolymer was obtained. The polymerization rate was 20 g copolymer/(g palladium.hour).

### Example 9

A carbon monoxide/propene copolymer was prepared in substantially the same way as in example 8, but with the difference that the catalyst solution additionally contained 5 ml (87 mmol) acetic acid.

11.5 g copolymer was obtained. The polymerization rate was 230 g copolymer/(g palladium.hour).

Of the examples 1-9, examples 5, 7 and 9 are according to the invention. In these examples catalyst compositions according to the invention were used which in addition to an anion of a strong acid with a pK_{A} of less than 2 also contained a weak acid with a pK_{A} of 4.75. Examples 1-4, 6 and 8 fall outside the scope of the invention. They have been included in the patent application for comparison. Example 1 demonstrates that no appreciable quantity of polymer is formed under the selected conditions with a catalyst composition containing only acetic acid as acid component. Examples 2 and 3 show that neither a 50% increase in the reaction temperature nor an increase in the acid concentration of the catalyst composition by a factor of 5 can alter this situation. The favourable influence on the polymerization rate which occurs if a weak acid is incorporated into a catalyst composition which already contains an anion of a strong acid can be clearly seen by comparison of the results of examples 5, 7 and 9 with those of examples 4, 6 and 8 respectively.

It was established by ¹³C-NMR analysis that the carbon monoxide/ethene copolymers prepared according to examples 4-7 and the carbon monoxide/propene copolymers prepared according to examples 8 and 9 were built up of linear chains in which the units from carbon monoxide on the one hand and the units from ethene or propene on the other hand were present in an alternating arrangement.

## Claims

1. Catalyst compositions, characterized in that they are based on
a) a Group VIII metal,
b) an anion of an acid having a pK_{A} of less than 2,
c) a phosphorus bidentate ligand of the general formula (R³)(R⁴)P-R-P(R³)(R⁴) in which R³ and R⁴ represent identical or different optionally polar substituted hydrocarbyl groups and R is a divalent organic bridging group containing at least two carbon atoms in the bridge connecting the two phosphorus atoms, and
d) an acid having a pK_{A} of at least 4 but less than 6, in a quantity of at least 10 mol per g.atom Group VIII metal.

2. Catalyst compositions according to claim 1, characterized in that they contain palladium as Group VIII metal.

3. Catalyst compositions according to claim 1 or 2, characterized in that as component b) they contain trifluoroacetic acid, nickel perchlorate or nickel trifluoromethanesulphonate.

4. Catalyst compositions according to one or more of claims 1-3, characterized in that they contain component b) in a quantity of 1-100 mol per g.atom Group VIII metal.

5. Catalyst compositions according to one or more of claims 1-4, characterized in that they contain a phosphorus bidentate ligand in which the groups R³ and R⁴ are optionally polar substituted phenyl groups or are alkyl groups.

6. Catalyst compositions according to one or more of claims 1-5, characterized in that they contain component c) in a quantity of 0.5-2 mol per g.atom Group VIII metal.

7. Catalyst compositions according to one or more of claims 1-6, characterized in that they contain acetic acid as component d).

8. Catalyst compositions according to one more of claims 1-7, characterized in that they contain component d) in a quantity of 10-10,000 mol per g.atom Group VIII metal.

9. Process for the preparation of polymers, characterized in that a mixture of carbon monoxide with one or more olefinically unsaturated compounds is contacted at elevated temperature and pressure with a catalyst composition according to one or more of claims 1-8.

10. Process according to claim 9, characterized in that it is carried out at a temperature of 25-150°C, a pressure of 2-150 bar and that per mol of olefinically unsaturated compound to be polymerized a quantity of catalyst composition is used which contains 10⁻⁷-10⁻³ g.atom Group VIII metal.

## Patentansprüche

1. Katalysatorzusammensetzungen, dadurch gekennzeichnet, daß sie auf
a) einem Metall der Gruppe VIII,
b) einem Anion einer Säure mit einem pK_{A}-Wert unter 2,
c) einem zweizähnigen Phosphorliganden der allgemeinen Formel (R³)(R⁴)P-R-P(R³)(R⁴), worin R³ und R⁴ für gleiche oder verschiedene, gegebenenfalls polar substituierte Kohlenwasserstoffgruppen stehen und R eine die beiden Phosphoratome verbindende zweiwertige organische Brückengruppe mit mindestens zwei Kohlenstoffatomen in der Brücke bedeutet, und
d) einer Säure mit einem pK_{A}-Wert von mindestens 4, aber unter 6, in einer Menge von mindestens 10 mol pro Grammatom des Metalls der Gruppe VIII
basieren.

2. Katalysatorzusammensetzungen nach Anspruch 1, dadurch gekennzeichnet, daß sie als Metall der Gruppe VIII Palladium enthalten.

3. Katalysatorzusammensetzungen nach Anspruch 1 oder 2, dadurch gekennzeichnet, daß sie als Komponente b) Trifluoressigsäure, Nickelperchlorat oder Nickeltrifluormethansulfonat enthalten.

4. Katalysatorzusammensetzungen nach einem oder mehreren der Ansprüche 1-3, dadurch gekennzeichnet, daß sie die Komponente b) in einer Menge von 1-100 mol pro Grammatom des Metalls der Gruppe VIII enthalten.

5. Katalysatorzusammensetzungen nach einem oder mehreren der Ansprüche 1-4, dadurch gekennzeichnet, daß sie einen zweizähnigen Phosphorliganden enthalten, bei dem die Gruppen R³ und R⁴ gegebenenfalls polar substituierte Phenylgruppen oder aber Alkylgruppen bedeuten.

6. Katalysatorzusammensetzungen nach einem oder mehreren der Ansprüche 1-5, dadurch gekennzeichnet, daß sie die Komponente c) in einer Menge von 0,5-2 mol pro Grammatom des Metalls der Gruppe VIII enthalten.

7. Katalysatorzusammensetzungen nach einem oder mehreren der Ansprüche 1-6, dadurch gekennzeichnet, daß sie als Komponente d) Essigsäure enthalten.

8. Katalysatorzusammensetzungen nach einem oder mehreren der Ansprüche 1-7, dadurch gekennzeichnet, daß sie die Komponente d) in einer Menge von 10-10.000 mol pro Grammatom des Metalls der Gruppe VIII enthalten.

9. Verfahren zur Herstellung von Polymeren, dadurch gekennzeichnet, daß man bei erhöhter Temperatur und erhöhtem Druck ein Gemisch aus Kohlenmonoxid und einer oder mehreren olefinisch ungesättigten Verbindungen mit einer Katalysatorzusammensetzung nach einem oder mehreren der Ansprüche 1-8 in Berührung bringt.

10. Verfahren nach Anspruch 9, dadurch gekennzeichnet, daß man es bei einer Temperatur von 25-150°C und einem Druck von 2-150 bar durchführt und pro Mol zu polymerisierender olefinisch ungesättigter Verbindung eine 10⁻⁷-10⁻³ Grammatom des Metalls der Gruppe VIII enthaltende Menge an Katalysatorzusammensetzung verwendet.

## Revendications

1. Compositions catalytiques, caractérisées en ce qu'elles sont basées sur
a) un métal du groupe VIII,
b) un anion d'un acide possédant un pK_{A} inférieur à 2,
c) un ligand bidentate du phosphore de la formule générale (R³)(R⁴)P-R-P(R³)(R⁴) dans laquelle R³ et R⁴ représentent des radicaux hydrocarbyle à substitution polaire éventuelle, identiques ou différents et R représente un groupe de pontage organique bivalent contenant au moins deux atomes de carbone dans le pont reliant les atomes de phosphore et
d) un acide possédant un pK_{A} d'au moins 4 mais inférieur à 6, en une quantité d'au moins 10, moles par atome-gramme de métal du groupe VIII.

2. Compositions catalytiques suivant la revendication 1, caractérisées en ce qu'elles contiennent du palladium à titre de métal du groupe VIII.

3. Compositions catalytiques suivant la revendication 1 ou 2, caractérisées en ce que, à titre de composant b), elles contiennent de l'acide trifluoracétique, du perchlorate de nickel, ou du trifluorométhanesulfonate de nickel.

4. Compositions catalytiques suivant l'une quelconque des revendications 1 à 3, caractérisées en ce qu'elles contiennent le composant b) en une quantité de 1-100, moles par atome-gramme de métal du groupe VIII.

5. Compositions catalytiques suivant l'une quelconque des revendications 1 à 4, caractérisées en ce qu'elles contiennent un ligand bidentate du phosphore dans lequel les groupes R³ et R⁴ sont des radicaux alkyle, ou des radicaux phényle à substitution polaire éventuelle.

6. Compositions catalytiques suivant l'une quelconque des revendications 1 à 5, caractérisées en ce qu'elles contiennent le composant c) en une quantité de 0,5-2, moles par atome-gramme de métal du groupe VIII.

7. Compositions catalytiques suivant l'une quelconque des revendications 1 à 6, caractérisées en ce qu'elles contiennent de l'acide acétique à titre de composant d).

8. Compositions catalytiques suivant l'une quelconque des revendications 1 à 7, caractérisées en ce qu'elles contiennent le composant d) en une quantité de 10-10.000, moles par atome-gramme de métal du groupe VIII.

9. Procédé de préparation de polymères, caractérisé en ce que l'on met un mélange de monoxyde de carbone et d'un ou plusieurs composés oléfiniquement insaturés en contact, à température et à pression élevées, avec une composition catalytique suivant l'une quelconque des revendications 1 à 8.

10. Procédé suivant la revendication 9, caractérisé en ce qu'on l'entreprend à une température de 25 à 150°C, sous une pression de 2 à 150 bars et en ce que, par mole de composé oléfiniquement insaturé à polymériser, on utilise une quantité de composition catalytique qui contient 10⁻⁷-10⁻³ atome-gramme de métal du groupe VIII.
